# EUROPEAN PATENT APPLICATION

(11) **EP 4 376 356 A1**
(43) Date of publication of application: **29.05.2024**
(21) Application number: 22209451.8
(22) Date of filing: 24.11.2022
(51) Int. Cl.: H04L 9/40, G06F 21/62, G06F 21/55

(54) **ANONYMOUS DATA EXCHANGE**

(71) Applicant: ABB SCHWEIZ AG, 5400 Baden (CH)
(72) Inventor: MACZEY, Sylvia, 69493 Hirschberg (DE); COPPIK, Nicolas, 64293 Darmstadt (DE); SCHMIDT, Benedikt, 69117 Heidelberg (DE); GAERTLER, Marco, 69221 Dossenheim (DE)
(74) Representative: Maiwald GmbH

(57) **Abstract**

Computer-implemented method for providing a data exchange of sensitive data between at least one data provider and at least one data receiver, comprising: providing sensitive data by the at least one data provider; anonymizing the provided sensitive data and providing the anonymized sensitive data with an anonymized connection link; providing the anonymized sensitive data with the anonymized connection link to the at least one data receiver, in case the anonymized sensitive data are considered by the at least one data receiver as to be of interest, providing an anonymized communication between the at least one data receiver and the at least one data provider by the anonymized connection link, wherein the communication includes: providing a request for changing the anonymization via the anonymized communication to the at least one data provider, approving or denying the request for changing the anonymization by the at least one data provider, providing the anonymized sensitive data having a changed anonymization to the at least one data receiver when the request is approved.

## Description

### TECHNICAL FIELD

The present disclosure relates to a computer-implemented method for providing a data exchange of sensitive data between a data provider and at least one data receiver, a data provider device, a data receiver device, and a system for providing a data exchange of sensitive data between a data provider and at least one date receiver.

### TECHNICAL BACKGROUND

The general background of this disclosure is the providing of anonymized sensitive data from a data provider to a data receiver.

Today's securing operational technology, OT, and industrial control system, ICS, infrastructure involves constant monitoring of the state of the infrastructure. While security information and event management, SIEM, systems supply rules to discover known threats by monitoring event data, anomaly detection is a good way to discover unknown and suspicious situations. In case of the discovery of such a suspicious situation, further analysis is often required, which includes knowledge on newest attack scenarios and the comparison with data from other sites. Therefore, this second level analysis of abnormal situations cannot be done by each individual infrastructure owner but should be bundled at the ICS and/or security solution provider. This approach requires the plant owner to send data representing abnormal situations to the ICS and/or security solution provider. However, plant owners are often reluctant to share this sensitive data. Data Governance and Data Privacy regulations as well as Cyber Security awareness often do not allow the exchange of plain data. At the ICS and/or Security solution provider's site an expert can analyze the packages submitted by the plant owner either individually or compare them with other plant owner's packages. The identification of certain patterns as security threats, however, becomes more difficult with an increasing level of data anonymization and encryption.

Hence, there is a need to provide a method and a system, in particular an appropriate mechanism, which encourage and increase a willingness a data owner to send respectively share data, in particular sensitive data, to a data receiver in an encrypted and anonymized manner. Further, there is a need to provide a method and a system with which a data receiver, in particular an expert, gets a plurality of data to be processed respectively analyzed and can request to see e.g. some portions of the anonymized sensitive data with a lower level of anonym ization for providing an increased identification of certain patterns as security threats.

### SUMMARY OF THE INVENTION

In one aspect of the invention a computer-implemented method for providing a data exchange of sensitive data between at least one data provider and at least one data receiver is presented, comprising:
providing sensitive data by the at least one data provider;
anonymizing the provided sensitive data and providing the anonymized sensitive data with an anonymized connection link;
providing the anonymized sensitive data with the anonymized connection link to the at least one data receiver,
   in case the anonymized sensitive data are considered by the at least one data receiver as to be of interest,
providing an anonymized communication between the at least one data receiver and the at least one data provider by the anonymized connection link, wherein the communication includes:
   providing a request for changing the anonymization via the anonymized communication to the at least one data provider;
   receiving the request by the one of the at least one data provider being allowed to receive the request;
   approving or denying the request for changing the anonymization by the one of the at least one data provider,
   providing the anonymized sensitive data having a changed anonymization to the at least one data receiver when the request is approved.

The term sensitive data as used herein is to be understood broadly and represents any data indicating private and/or secret data which should not or may not be accessible to the public. The sensitive data may include specific data types. Exemplary, specific data types may be data representing abnormal situations, an anomaly, the company name, address data, personal data, plant data, device identifier data, equipment identifiers, alarm and event messages, and process values, but is not limited thereto. On sensitive data, normally data governance and data privacy regulations as well as cyber security regulations are applied. The sensitive data may be a whole data set of the sensitive data or a part of the whole data set of the sensitive data, snippets of the data set, and a pattern of the whole data set of the sensitive data like a part of the sensitive data indicating only one specific data type. The sensitive data may be provided by a querying, an identification respectively detection of the data provider, but is not limited thereto.

The term data provider as used herein is to be understood broadly and represents any natural person and/or company being able to provide data. For instance, the data provider may be a plant owner and data owner, but is not limited thereto.

The term data receiver as used herein is to be understood broadly and represents any natural person and/or company being able to receive data. For instance, the data receiver may be an external data analyst, an industrial control system solution provider, a distributed control system supplier, and/or a security solution provider, but is not limited thereto. The data receiver can receive anonym ized sensitive data from at least two data provider, i.e. from a plurality of data providers.

The term anonymizing as used herein is to be understood broadly and represents any method or process for encrypting the sensitive data. The anonymization is provided by an application of encryption algorithms to the sensitive data. For instance, the encryption algorithms may be standard encryption algorithms like Authenticated Encryption, AES, ChaCha, Speck, but are not limited thereto. Optionally, such algorithms could be used in an Authenticated Encryption with Associated Data, AEAD, construction, e.g. AES-GCM. Anonymization of encrypted fields can be repealed by sharing the key with the recipient, allowing the recipient to decrypt all fields encrypted with a certain key. The anonymization may provide a multi-level anonymization including at least three level of anonymization, i.e. no anonymization, minor level of anonymization and highest level of anonymization. Based on the level of anonymization, the data receiver does not know who send the anonymized sensitive data and/or what the individual entries in the sensitive data mean. The anonymization can be freely selected, chosen, defined and/or provided by the data provider via an anonym ization configuration tool. The anonym ization respectively the level of anonym ization/encryption can be changed at any time by the data provider. Further, the anonymization of the sensitive data can be repealed at any time. The level of anonymization can be pre-provided, pre-selected, pre-configures or free selected anonymization level by the data provider. Further, in order to automate the anonymization of the sensitive data default anonymization level can be set for individual types of the sensitive data.

The phrase considering the anonymized sensitive data by the at least one data receiver as to be of interest as used herein is to be understood broadly and represents that the data receiver may examine/analyze the anonymized/encrypted sensitive data for the occurrence of known patterns. For instance, known patterns may be previously occurred anomalies etc. being recognized by or stored in a database of the data receiver device. A pattern may be for example a minimum number of failed login attempt followed by a successful login attempt within a given time frame, but is not limited thereto. In case known pattern occurs, these patterns are identified as sensitive data being of interest, such that the data receiver gets the demand/request to change the level of anonymization of the anonymized sensitive data and request to downgrade the level of anonymization for the part of the data containing the pattern of interest.

The term anonymized communication as used herein is to be understood broadly and represents any anonymized exchange of information and/or data, but is not limited thereto. The communication is provided between the data provider and the data receiver. The communication between the data receiver and the data provider is provided by the following sub steps. Each part of the anonymized sensitive data being provided by the data provider that is submitted/provided to the data receiver gets respectively is provided with an anonymized connection link. When the data receiver wants to request for a de-anonym ization of the anonymized sensitive data, the request is provided with the anonymized connection link to the at least one data provider. Since only one of the at least one data providers, i.e. the data provider of the original sensitive data, has the same, a corresponding, or a complementary anonymized connection link, only the one of the at least one data providers is able and allowed to receive and process the request issued by the data receiver. The one of the at least one data provider can decrypt the request. Other data providers of the at least one data providers are not able to decrypt the request and will not get any information about the content of the request. When the data provider accepts the request and provides anonym ized sensitive data with a lower level of anonymization, the data provider provides these anonymized sensitive data back to the data receiver. Additionally or alternatively, the providing of a communication can be fully or at least partially automatized. Therefore, most of the anonymization level changes and sending requests are preformed automatically such that human interactions are minimized to a minimum. Beside the provided requests during the communication, the data receiver can transmit a request and a comment to the data provider. Additionally or alternatively, the data provider is able to transmit an answer-comment back to the data receiver. The answer-comment may include information about why the request of the data receiver was denied or accepted, i.e. the reasons for acceptance and deny. The communication may be a two-way communication. The communication might be possible between the data receiver and the data provider at any time.

The term request as used herein is to be understood broadly and represents any request or query to repeal the anonymization or downgrade a level of the anonymization. The request can be directed to the whole dataset of the anonymized sensitive data or a part of the anonymized sensitive data, in particular a specific data type of the anonymized sensitive data. Preferably, the request only requests to specific data types of the sensitive data. Additionally, the request may include a comment. Exemplary, a comment may be a question or an explanation e.g. why further de-anonymization is needed by the data receiver. Further, in the request, the data receiver can request to delimit the level of the anonymization of the anonymized sensitive data to a specific level, i.e. a level selected by the data receiver.

The term anonymized connection link as used herein is to be understood broadly and represents any link providing a connection between the data provider and the data receiver. The anonymized connection link may be a unique identity, unique ID and/or a public ID-key, but is not limited thereto. For instance, the public ID-key is a long cipher code. The connection link may be an integer or a string, but is not limited thereto. The anonymized connection link may be an uniform link, i.e. the anonymized connection link of the data provider and the anonymized connection link of the submitted/provided anonymized sensitive data being provided to the data receiver are identical, or a complementary link, i.e. the connection link of the data provider and the anonymized connection link of the submitted/provided anonymized sensitive data being provided to the data receiver fits to each other, but is not limited thereto. The anonymized connection link provides that the data receiver is not able to identify the data provider.

The term data as used herein is to be understood broadly in the present case and represents any kind of data. Data may be single numbers/numerical values, a plurality of a numbers/numerical values, a plurality of a numbers/numerical values being arranged within a list, stings, and integers, but are not limited thereto.

By providing sensitive data in an anonymized manner, providing these data from the data owner to the data receiver, and providing an anonymized communication between the at least one data receiver and the data provider, the willingness of the data provider to share the sensitive data can be significantly increased. Further, a data receiver, in particular an expert, has the possibility to request and negotiate to see e.g. some portions of the anonymized sensitive data with a lower level of anonymization, such that an increased identification of certain patterns as security threats can be provided.

In an embodiment of the computer-implemented method for providing a data exchange of sensitive data between a data provider and at least one date receiver, the anonymized communication is a two-way communication.

The term two-way communication as used herein is to be understood broadly and represents that a communication between the data provider and data receiver is possible in both directions, i.e. directly or indirectly from the data provider to the data receiver and directly or indirectly from the data receiver to the data provider.

By providing a two-way communication between the data receiver and the data provider, a negotiation of the level of anonym ization of the anonymized sensitive data can be provided, which increases the constructive exchange of sensitive data between the data provider and the data receiver. Specifically, the negotiation leads to a state that both the data receiver and data provider has to find a compromise with respect to the level of anonymization such that both the data receiver and the data provider will benefit from this data exchange.

In an embodiment of the computer-implemented method for providing a data exchange of sensitive data between a data provider and at least one date receiver, the anonymizing of the provided sensitive data comprises a multi-level anonymization, wherein the level of the anonymization is selected and defined by the at least one data provider.

By providing the possibility that the data provider is able to select and define the level of the anonymization of these sensitive data, the willingness and trust of the data provider to share the sensitive data can be significantly increased.

In an embodiment of the computer-implemented method for providing a data exchange of sensitive data between a data provider and at least one date receiver, the changing of the anonymization comprises repealing the anonymization or downgrading a level of the anonym ization.

In an embodiment of the computer-implemented method for providing a data exchange of sensitive data between a data provider and at least one date receiver, the anonym ized sensitive data is a whole data set of anonym ized sensitive data or a part of the anonym ized sensitive data set.

In an embodiment of the computer-implemented method for providing a data exchange of sensitive data between a data provider and at least one date receiver, the method further comprises the step of demanding the deletion of the provided anonymized sensitive data or substituting the provided anonymized sensitive data with different data by the data provider.

By giving the data provider the freedom of action to delete and to substitute the provided anonymized sensitive data with different data, the willingness and trust of the data provider to share the sensitive data can be significantly increased.

In an embodiment of the computer-implemented method for providing a data exchange of sensitive data between a data provider and at least one date receiver, the method further comprises the step of processing the provided anonymized sensitive data having a changed anonymization by the at least one data receiver; and providing the results of the processing to the at least one data provider.

The term processing as used herein is to be understood broadly and represents any method or process for analyzing the received anonymized sensitive data having a changed anonymization individually or for comparing the anonymized sensitive data having a changed anonymization with other data. The results of the processing may be a broadcast of new rules and/or newsletter, the results of the analysis, in particular the analysis report, but is not limited thereto. Additionally, the results of the processing can be provided to all other data providers.

By providing an analysis and providing the results to the at least one data provider, the data provider can receive information about e.g. anomalies etc.

In an embodiment of the computer-implemented method for providing a data exchange of sensitive data between a data provider and at least one date receiver, the processing of the provided anonym ized sensitive data having a changed anonymization is an analysis of security threats.

In a further aspect a data provider device is presented, comprising:
a first providing unit for providing sensitive data;
an anonymization unit for anonymizing provided sensitive data and for providing an anonymized connection link to the anonymized sensitive data,
   wherein the anonymization unit comprises an anonymization configuration tool for selecting and defining an anonymization level,
a second providing unit for providing anonymized sensitive data with the anonymized connection link to at least one data receiver device; and
a communication unit for anonymous communication to the at least one data receiver device,
wherein the communication unit comprises:
a receiver unit for receiving and allowing the request on changing the anonym ization;
a decision on request unit for providing a decision on the received and allowed request;
an anonymization editor unit for providing anonymized sensitive data having a changed anonymization; and
a third providing unit for providing the provided anonymized sensitive data having a changed anonymization to the at least one data receiver device.

The term anonymization configuration tool as used herein is to be understood broadly and represents any tool at which the level of anonymization are selected, chosen and/or defined by the data provider for one or more specific data types of the anonymized sensitive data.

The term decision on request unit as used herein is to be understood broadly and represents any unit for providing either an acceptance or a deny of the request to change the level of anonymization of the sensitive data. Additionally, the decision on request unit is able to store specific anonymization justifications with respect to specific parts, patterns or specific data types of the sensitive data. For instance, to avoid an overhasty agreement on a lower anonymization level red flags can be set in the anonymization configuration tool for specific anonymization justifications that should not be changed. Further, a warning can be added to the request when the request violates a red flag. Also, flags can be set for settings that are not negotiable. In this case a request for a non-negotiable anonymization level change is ignored. Additionally or alternatively, to ensure that a data provider is not bothered with requests for anonymization level changes on a dataset that the data provider has already declined or accepted, repeated requests by the same data provider are also ignored.

The term anonymization editor unit as used herein is to be understood broadly and represents any unit for changing the level of anonymization of the sensitive data. In other words, the anonymization editor unit provides an interactively changing, wherein the data receiver and the data provider interact with each other, of the anonymization level of the sensitive data, or parts of the sensitive data and/or individual data types. The change of the level of anonymization can be provided at any time. The anonymization editor unit may be used to overwrite the level of anonymization of the anonymized sensitive data or the default level of anonymization in an automatic anonymization process of the sensitive data.

In a further aspect a data receiver device is presented, comprising:
a receiving unit for receiving anonymized sensitive data with the anonymized connection link from at least one data provider device; and
a communication unit for anonymous communication to a data provider device,
wherein the communication unit comprises:
a search unit for searching of anonymized sensitive data to be of interest;
an anonymization level change request unit for providing a request for changing the anonym ization;
a providing unit for providing the request for changing anonymization to the at least one data provider device; and
a second receiving unit for receiving anonymized sensitive data having a changed anonym ization.

The term receiving unit as used herein is to be understood broadly and represents any unit being able to receive the anonymized sensitive data with the anonymized connection link from at least one data provider unit. The receiving unit may be able to differ and/or to provide a notification about already used or new datasets.

The term anonymization level change request unit as used herein is to be understood broadly and represents any unit being able to provide a request for changing the anonymization to a desired anonymization level and to provide the anonymized connection link being received together with the received anonymized sensitive data by the data receiver to the request. Additionally, the anonymization level change request unit may be able to provide a comment to the request. Exemplary, a comment may be a question or an explanation e.g. why further de-anonymization is needed by the data receiver.

In an embodiment of the data receiver device, the device further comprises: a processing unit for processing the provided anonymized sensitive data having a changed anonymization; and a third providing unit for providing the results of the processing to the at least one data provider.

In an embodiment of the data receiver device, the data receiver device further comprises a storage unit for storing the received anonym ized sensitive data with the anonym ized connection link and/or the results of the processing unit.

The term storage unit as used herein is to be understood broadly and represents any unit for storing anonymized sensitive data. For instance, the storage unit may be database, memory, storage device, cloud storage, and/or cache, but is not limited thereto. The storage unit stores the data provider's data packages, knowledge about the choosing levels of anonymization, the connection link, and storage about known patterns representing areas of interest like security threats. Additionally, the storage unit also stores all services, like analyses and determinations, being made by the data receiver. Further, the storage unit stores the information about which request has been already made for each record.

In a further aspect a system for providing a data exchange of sensitive data between a data provider and at least one data receiver is presented, comprising a data provider unit as described in the present disclosure and a data receiver unit as described in the present disclosure.

In a further aspect a computer program element with instructions, which, when executed on computing devices of a computing environment, is configured to carry out the steps of the computer-implemented method as described in the present disclosure in a system as described in the present disclosure.

In a further aspect a computer-readable storage medium comprising instructions which, when executed by a computer, cause the computer to carry out the computer-implemented method as described in the present disclosure.

Any disclosure and embodiments described herein relate to the computer-implemented method, the data providing unit, data receiving unit, and the system, lined out above and vice versa. Advantageously, the benefits provided by any of the embodiments and examples equally apply to all other embodiments and examples and vice versa.

As used herein "determining" also includes "initiating or causing to determine", "generating" also includes "initiating or causing to generate" and "providing" also includes "initiating or causing to determine, generate, select, send or receive". "Initiating or causing to perform an action" includes any processing signal that triggers a computing device to perform the respective action.

### BRIEF DESCRIPTION OF THE DRAWINGS

In the following, the present disclosure is further described with reference to the enclosed figures:
- Fig. 1: illustrates a flow diagram of a computer-implemented method for providing a data exchange of sensitive data between at least one data provider and at least one data receiver;
- Fig. 2: illustrates an example embodiment of the data provider device;
- Fig.3: illustrates an example embodiment of the data receiver device;
- Fig. 4: illustrates an example embodiment of the system for providing a data exchange of sensitive data between at least one data provider and at least one data receiver;
- Fig. 5: illustrates an example usage of the system;
- Fig. 6: illustrates an example of configuration settings/anonymization justification in the anonymization configuration tool;
- Fig. 7: illustrates a broadcasting service;
- Fig. 8: illustrates a flow diagram of how a data provider submits a dataset;
- Fig. 9: illustrates a flow diagram of how the data provider handles a request from a data receiver;
- Fig. 10: illustrates a flow diagram of a data anonymization and submission in the data provider device
- Fig. 11: illustrates a flow diagram of a data handling in the data receiver device.

### DETAILED DESCRIPTION OF EMBODIMENT

The following embodiments are mere examples for the computer-implemented method and the system disclosed herein and shall not be considered limiting.

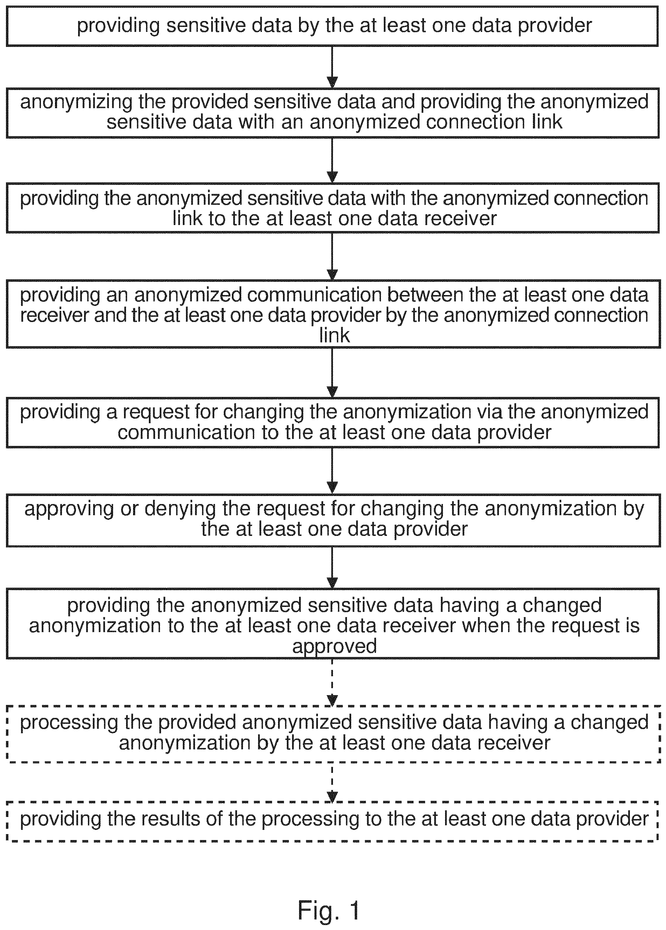

Fig. 1 illustrates a flow diagram of a computer-implemented method for providing a data exchange of sensitive data between at least one data provider and at least one data receiver. In a first step, sensitive data are provided by the at least one data provider. In a second step, the provided sensitive data are anonymized by an encoding method, wherein different sensitive data types has different level of anonymization. Further, in the second step, the anonymized sensitive data are provided with an anonymized connection link. The anonymized connection link is a unique ID which enables respectively represents an anonymized connection between the provided anonymized sensitive data and the data provider. In a third step, the anonymized sensitive data with the anonymized connection link are provided to the at least one data receiver. The at least one data receiver receives data from a plurality of data provider and examines the received anonymized sensitive data if there are at least one data being considered as to be of interest. In case anonymized sensitive data are considered by the at least one data receiver as to be of interest, an anonymized communication between the at least one data receiver and the at least one data provider by the anonymized connection link is provided. The communication is provided by the anonymized connection link. The communication includes the sub steps of: providing a request for changing the anonymization via the anonymized communication to the at least one data provider wherein the request is provided with the connection link of the anonymized sensitive data received by the data receiver. The communication further comprises the sub step of receiving the request by the one of the at least one data provider being allowed to receive the request. The request is allowed when the anonymized connection link of the data provider is identical to the anonymized connection link of the request. Furthermore, the communication includes the steps of approving or denying the request for changing the anonymization by the one of the at least one data provider, and providing the anonymized sensitive data having a changed anonymization to the at least one data receiver when the request is approved.

Optionally, the computer-implemented method for providing a data exchange of sensitive data between at least one data provider and at least one data receiver, further comprises the step of demanding the deletion of the provided anonymized sensitive data or substituting the provided anonymized sensitive data with different data.

Optionally, the computer-implemented method for providing a data exchange of sensitive data between at least one data provider and at least one data receiver, further comprises the steps of processing the provided anonymized sensitive data having a changed anonymization by the at least one data receiver; and providing the results of the processing to the at least one data provider.

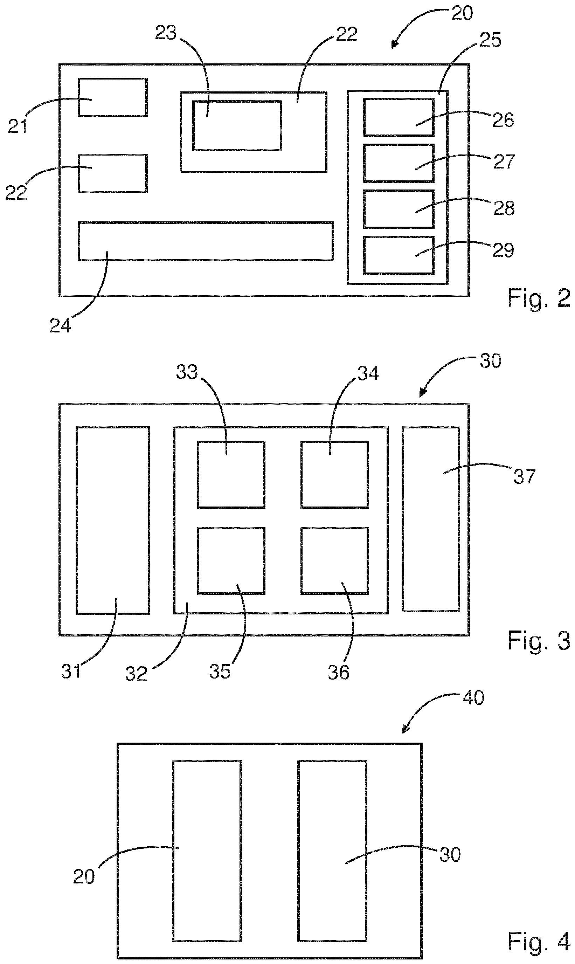

Fig. 2 illustrates an example embodiment of the data provider device. The data provider device 20 comprises a first providing unit 21 for providing sensitive data, an anonymization unit 22 for anonymizing provided sensitive data and for providing an anonymized connection link to the anonymized sensitive data. The anonymization unit 22 comprises an anonymization configuration tool 23 for selecting and defining an anonymization level. The data provider device 20 further comprises a second providing unit 24 for providing anonymized sensitive data to at least one data receiver device and a communication unit 25 for anonymous communication to the at least one data receiver device. The communication unit 25 comprises a receiver unit 26 for receiving and allowing the request on changing the anonymization, a decision on request unit 27 for providing a decision on the received and allowed request, an anonymization editor unit 28 for providing anonymized sensitive data having a changed anonymization, and a third providing unit 29 for providing the provided anonymized sensitive data having a changed anonym ization to the at least one data receiver device.

Fig.3 illustrates an example embodiment of the data receiver device. The data receiver device 30 comprises a receiving unit 31 for receiving anonymized sensitive data with the anonymized connection link from at least one data provider unit, and a communication unit 32 for anonymous communication to a data provider device. The communication unit 32 comprises a search unit 33 searching for anonymized sensitive data to be of interest, an anonymization level change request unit 34 for providing a request for changing the anonymization, a providing unit 35 for providing the request for changing anonymization to the at least one data provider device, and a second receiving unit 36 for receiving anonymized sensitive data having a repealed anonymization or a downgraded level of anonym ization.

Optionally, the data receiver device 30 further comprises a processing unit 37 for processing the provided anonymized sensitive data having a changed anonymization, and a third providing unit 38 for providing the results of the processing to the at least one data provider.

Optionally the data receiver device 30 further comprises a storage unit 39 for storing the received anonymized sensitive data with the anonymized connection link.

Fig. 4 illustrates an example embodiment of the system for providing a data exchange of sensitive data between at least one data provider and at least one data receiver. The system 40 comprises a data provider unit 20, and a data receiver unit 30.

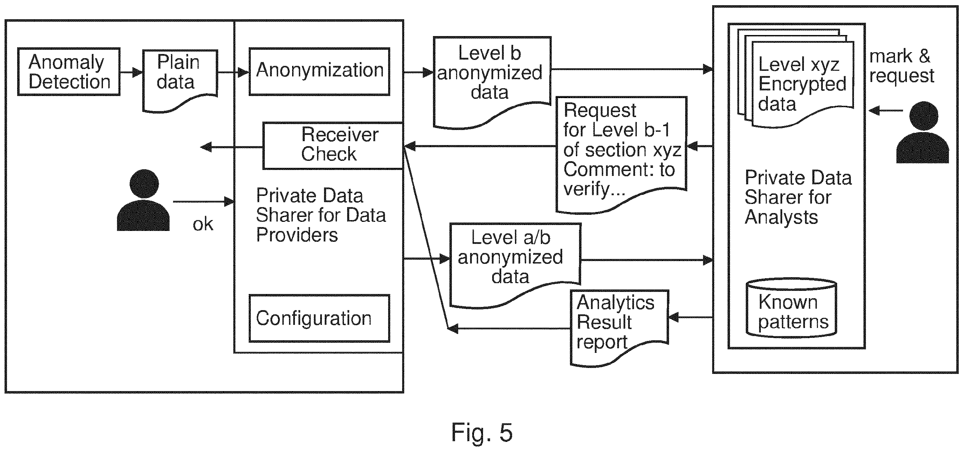

Fig. 5 illustrates an example usage of the system. A data provider has detected an anomaly in his data but cannot judge if it was caused by a security issue or not. The data provider can submit the detected anomaly to a data receiver, in particular an external analyst, by using the data provider device. The data are anonymized according to predefined configuration settings. The data receiver receives the data and compares it to other cases. The data receiver may find a similar case, but to be sure if the cases are comparable, the data receiver needs to know more of the data. The data receiver marks the part of the data that needs to be put to a lower level on anonymization, selects the desired anonymization level, adds a comment, why this is necessary and submits the request to the data provider. The request is sent to all data providers from which the data receiver receives data, but only the data provider of the data of interest can receive and process the request. The data provider permits the anonymization change and the modified data is resubmitted to the data receiver. Once the data receiver has finished the examining, a report about the findings may be send to the data provider.

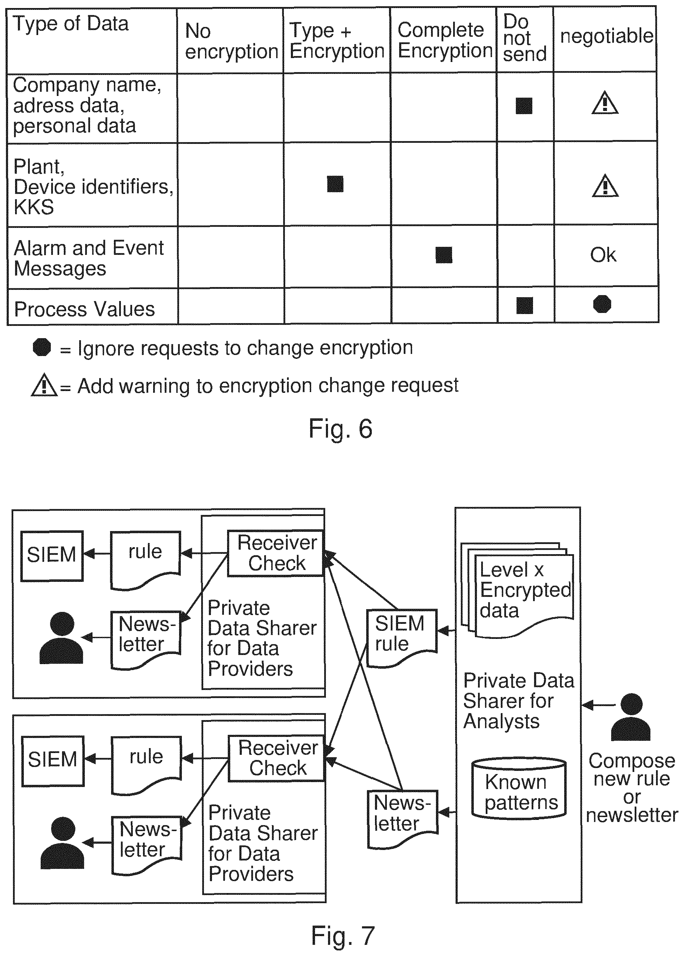

Fig. 6 illustrates an example of configuration settings/ anonymization justification in the anonymization configuration tool. The type of data company name, address data, personal data and process values are high sensible data such that these data are not send to a data receiver at all. The type of data plant, device identifiers and KKS are data which can be send to the data receiver with a medium anonymization/encryption. The type of data alarm and event messages are data which can send to the data receiver with a high anonymization/encryption. In case the data receiver requests a change of the level of anonymization the type of data process values, the request is ignored. This is provided by a red flag. In case the data receiver requests a change of the level of anonymization the type of data company name, address data, personal data, plant, device identifier, and power plant classification system, KKS, there is added a warning when a request is received. In case the data receiver requests a change of the level of anonymization the type of data alarm and event messages, the request is accepted without any acceptance of the data provider.

Fig. 7 illustrates a broadcasting service. The infrastructure of the system 40 can also be used for broadcasting the results of the further processing, i.e. the identification of security threats, can be provided as newsletter and/or a security information and event management rules, SIEM rules, to all data provider providing data to the data receiver. The data receiver provides these results and transmits these results wireless or by wire to the at least one data provider. The data provider can receive and check the results and can forward these results to a user, e.g. the newsletter, and to a SIEM, e.g. the SIEM rule.

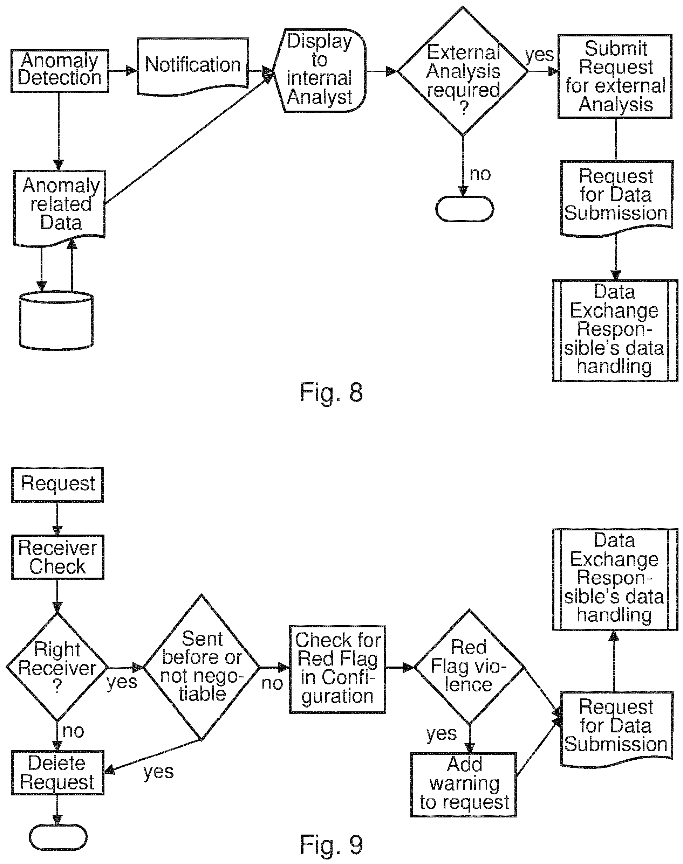

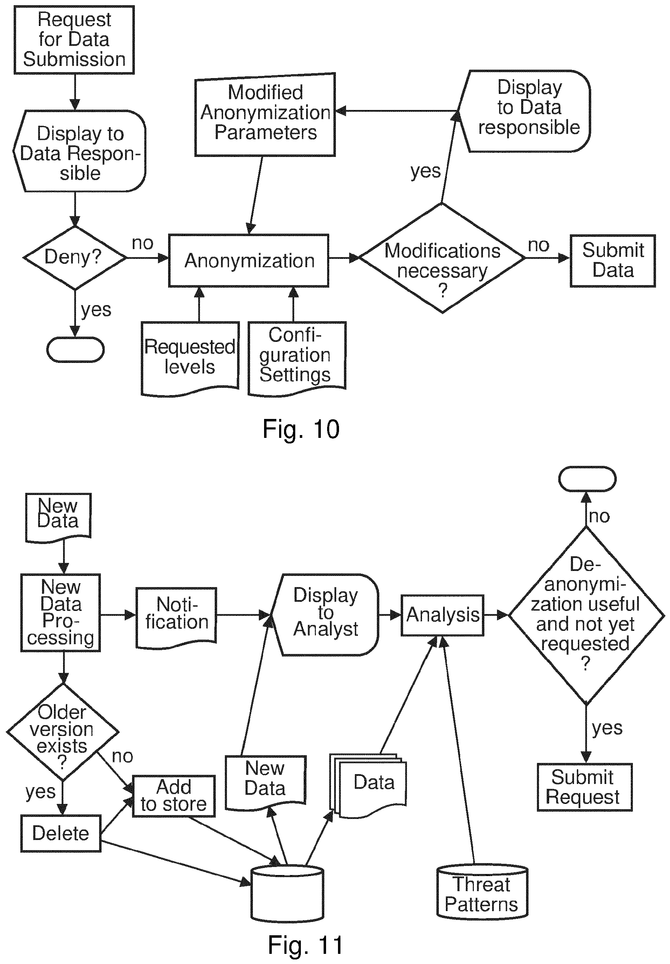

Fig. 8 illustrates a flow diagram of how a data provider submits a dataset. The data provider examines the data and may detect an anomaly. The data provider also provides anomaly related data which can be stored at a database or can be queried from a database. When an anomaly is detected, a notification is provided together with the anomaly data to an internal analyst of the data providing device. In case a, external analyst is required, the data provider submits a request for an external analysis, requests for data submission, and receives data via a data exchange. Further, Figure 8 shows possible steps before the data is anonymized and submitted to the data receiver. It shows that some data providers may first have an internal data analyst to analyse the data. Only the cases that cannot be solved are then sent to the external data receiver. The step "data exchange responsible's data handling" summarizes all steps of Figure 10.

Fig. 9 illustrates a flow diagram of how the data provider handles a request from a data receiver. When the data provided receives a request, the request is checked. When the receiver is right the data provider checks if the request was not send before or is negotiable. Otherwise or when the request is send before or is not negotiable, the request is deleted/ignored. After checking if the request was not send before and is negotiable, the dater provider checks if a red flag in the anonymization justification exists. When there is a red flag violence, there is added a warning to the request. Otherwise, the request for data submission is accepted and a data exchange is provided. Further, Figure 9 shows the necessary steps around anonymization. There are two scenarios when these steps are necessary: (a) Figure 8 shows an internal request from the data provider, because the data needs to be sent out to the data receiver. (b) Figure 9 shows an external request from the data provider. Here other steps are necessary like checking for the red flag or checking whether the request has been sent before.

Fig. 10 illustrates a flow diagram of a data anonymization and submission in the data provider device. The data provider device receives a request for data submission and displays the request to data responsible. When the data responsible accepts the request, the level of anonymization is provided again by taking into account the requested levels and the anonymization justification. In case a modification is necessary, the modification of the level of anonymization is provided by displaying the data to a responsible and modifying anonymization parameters. In case no modification is necessary, the sensitive data having a right anonymization is submitted to the data receiver by the data provider. Further, Figure 10 shows the process of anonymization. The anonymization depends on the settings made in the configuration tool and the requested anonymization level (in case of an external request). The anonymization of the data is automatically performed and can be modified by the data exchange responsible person. This can .e.g. be done by using an anonymization editor, where regions of the data can be selected and anonymized to another level.

Fig. 11 illustrates a flow diagram of a data handling in the data receiver device. When the data receiver device receives sensitive data, in particular new data, the received data are processed. During the process of the received data a notification is provided an it is checked if an older version exists. In case an older version exists, this older version is deleted and the newer version is added to a store, in particular storage medium. The new data stored at the storage medium and the notifications are displayed and provided to an analyst. The analyst examines the new data by querying known threat patterns from another database. When the analyst comes to the conclusion that a de-anonymization might be helpful, the analyst provides a requests and submits this request to the data provider. Further, Figure 11 shows the process on the data receiver's side. Once the data arrives, the data are stored, wherein older versions of this data are replaced, and the analyst is informed by a notification that new data has arrived. The analyst can have a look at the data, perform an analysis with the new data, which includes also data of other data providers and known threat patterns. Depending on the outcome of the analysis the analyst may decide if a reduced anonymization on at least parts of the data would be helpful. In case the analyst decide that a reduced anonymization on at least parts of the data would be helpful, a request is sent to the data provider.

The present disclosure has been described in conjunction with a preferred embodiment as examples as well. However, other variations can be understood and effected by those persons skilled in the art and practicing the claimed invention, from the studies of the drawings, this disclosure and the claims. Notably, in particular, the any steps presented can be performed in any order, i.e. the present invention is not limited to a specific order of these steps. Moreover, it is also not required that the different steps are performed at a certain place or at one node of a distributed system, i.e. each of the steps may be performed at a different nodes using different equipment/data processing units.

In the claims as well as in the description the word "comprising" does not exclude other elements or steps and the indefinite article "a" or "a" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Computer-implemented method for providing a data exchange of sensitive data between at least one data provider and at least one data receiver, comprising:
providing sensitive data by the at least one data provider;
anonymizing the provided sensitive data and providing the anonymized sensitive data with an anonymized connection link;
providing the anonymized sensitive data with the anonymized connection link to the at least one data receiver,
in case the anonymized sensitive data are considered by the at least one data receiver as to be of interest,
providing an anonymized communication between the at least one data receiver and the at least one data provider by the anonymized connection link, wherein the communication includes:
providing a request for changing the anonymization via the anonymized communication to the at least one data provider;
receiving the request by the one of the at least one data provider being allowed to receive the request;
approving or denying the request for changing the anonymization by the one of the at least one data provider,
providing the anonymized sensitive data having a changed anonymization to the at least one data receiver when the request is approved.

2. Computer-implemented method according to claim 1,
wherein the anonymized communication is a two-way communication.

3. Computer-implemented method according to any one of the preceding claims, wherein the anonymizing of the provided sensitive data comprises a multi-level anonymization, wherein the level of the anonymization is selected and defined by the at least one data provider.

4. Computer implemented method according to any one of the preceding claims, wherein the changing of the anonymization comprises repealing the anonymization or downgrading a level of the anonymization.

5. Computer-implemented method according to any one of the preceding claims, wherein the anonymized sensitive data is a whole data set of anonymized sensitive data or a part of the anonymized sensitive data set.

6. Computer-implemented method according to any one of the preceding claims,
further comprising:
demanding the deletion of the provided anonymized sensitive data or substituting the provided anonymized sensitive data with different data by the data provider.

7. Computer-implemented method according to any one of the preceding claims,
further comprising:
processing the provided anonymized sensitive data having a changed anonymization by the at least one data receiver; and
providing the results of the processing to the at least one data provider.

8. Computer-implemented method according to claim 7,
wherein the processing of the provided anonymized sensitive data having a changed anonym ization is an analysis of security threats.

9. Data provider device (20) comprising:
a first providing unit (21) for providing sensitive data;
an anonymization unit (22) for anonym izing provided sensitive data and for providing an anonymized connection link to the anonymized sensitive data,
wherein the anonymization unit (22) comprises an anonymization configuration tool (23) for selecting and defining an anonymization level,
a second providing unit (24) for providing anonymized sensitive data with the anonymized connection link to at least one data receiver device; and
a communication unit (25) for anonymous communication to the at least one data receiver device,
wherein the communication unit (25) comprises:
a receiver unit (26) for receiving and allowing the request on changing the anonym ization;
a decision on request unit (27) for providing a decision on the received and allowed request;
an anonymization editor unit (28) for providing anonymized sensitive data having a changed anonymization; and
a third providing unit (29) for providing the provided anonymized sensitive data having a changed anonymization to the at least one data receiver device.

10. Data receiver device (30) comprising:
a receiving unit (31) for receiving anonymized sensitive data with the anonymized connection link from at least one data provider unit; and
a communication unit (32) for anonymous communication to a data provider device, wherein the communication unit (32) comprises:
a search unit (33) searching for anonymized sensitive data to be of interest;
an anonymization level change request unit (34) for providing a request for changing the anonymization;
a providing unit (35) for providing the request for changing anonymization to the at least one data provider device; and
a second receiving unit (36) for receiving anonymized sensitive data having a changed anonymization.

11. Data receiver device (30) according to claim 9, further comprising:
a processing unit (37) for processing the provided anonymized sensitive data having a changed anonymization; and
a third providing unit (38) for providing the results of the processing to the at least one data provider.

12. Data receiver device (30) according to claims 9 or 10, further comprising:
a storage unit (39) for storing the received anonymized sensitive data with the anonymized connection link and/or the results of the processing unit.

13. System (40) for providing a data exchange of sensitive data between a data
provider and at least one data receiver, comprising:
a data provider unit (20) according to claim 9, and
a data receiver unit (30) according to claims 10 to 12.

14. Computer program element with instructions, which, when executed on computing devices of a computing environment, is configured to carry out the steps of the computer-implemented method according to any one of the claims 1 to 8 in a system according to any one of claim 13.

15. A computer-readable storage medium comprising instructions which, when executed by a computer, cause the computer to carry out the computer-implemented method according to any one of claims 1 to 8.
